# EUROPEAN PATENT SPECIFICATION

(11) **EP 3 803 217 B1**
(45) Date of publication and mention of the grant of the patent: **15.01.2025**
(21) Application number: 19812567.6
(22) Date of filing: 29.05.2019
(51) Int. Cl.: F24D 10/00, F24D 11/00, F24D 11/02, F24D 15/04, F24D 17/02, F24D 3/08, F24D 19/10

(54) **HEATING AND COOLING SYSTEM, CORRESPONDING METHOD AND USE OF THE SYSTEM**
HEIZ- UND KÜHLSYSTEM, ENTSPRECHENDES VERFAHREN UND VERWENDUNG DES SYSTEMS
SYSTÈME DE CHAUFFAGE ET DE REFROIDISSEMENT, PROCÉDÉ ET UTILISATION DU SYSTÈME CORRESPONDANTS

(30) Priority: 30.05.2018 FI 20185492
(43) Date of publication of application: 14.04.2021
(73) Proprietor: Kymi-Solar Oy, 48410 Kotka (FI)
(72) Inventor: TERÄVÄ, Ville, 48410 Kotka (FI)
(74) Representative: Papula Oy
(86) International application number: PCT/FI2019/050417
(87) International publication number: WO 2019/229303

(56) References cited:
- EP-A1- 3 067 631
- EP-A1- 3 296 647
- WO-A1-2010/145040
- WO-A2-2010/102626
- DE-A1- 19 619 793
- DE-A1- 2 834 442
- FI-B- 113 203
- RU-C1- 2 636 885
- No further relevant documents disclosed

## Description

### FIELD OF THE INVENTION

The application relates to a heating and cooling system as defined in claim 1, such as a heating and cooling system of a building, and to a heating and cooling method as defined in claim 7. In addition, the application relates to a use of the system as defined in claim 10.

### BACKGROUND OF THE INVENTION

It is known to use district heating in the heating of buildings. In a district heating network, heat is generated in a centralized manner in fueloperated power plants, and it is transferred to consumption sites by means of hot water. In the district heating network there circulates a feed stream of district heating water, which is arranged to flow in a feed pipe of the district heating network to a customer, and a return stream of district heating water which comes from the customer and is arranged to flow in a return pipe of the district heating network. Large heat pumps may also be used in the district heating networks, especially in district heating network type district cooling networks for the purpose of cooling properties.

However, the buildings' separate ground and air source as well as air-water heat pumps reduce the consumption of district heating. The use of heat pumps may also reduce cooling of the return stream of district heating, impairing the operation and costefficiency of the district heating network in many different ways, especially in combined district heating and power generation.

In addition, the cooling of buildings has conventionally been implemented by electrical compressor cooling devices where excess heat is not recovered, but it is instead condensed to the outdoor air. This is expensive and lacks energy efficiency. One alternative is a district heating network type district cooling network in which, instead of warm water, cold water is pumped to the consumption sites and the dwellings are cooled by means of the cold water and the building's own cooling system. Building a district cooling network is, however, expensive with all the excavation work.

FI 1132023 discloses a method for cooling water of the district cooling network. EP 3067631 discloses a control system for heat exchange between district heating networks. DE 19619793 discloses a heat recovery unit using a heat pump. DE 2834442 discloses a heat pump for household water heating. WO 2010/145040 discloses a district energy sharing system. EP 3296647 discloses a local energy distributing system. RU 2636885 discloses a system of building heat supply. WO 2010/102626 discloses a closed loop heating system.

### OBJECT OF THE INVENTION

An object of the invention is to disclose a new type of building-specific or property-specific heating and cooling system in which different types of heating and cooling arrangements may be utilized. In addition, an object of the invention is to disclose a heating and cooling system utilizing the existing structures. In addition, an object of the invention is to improve the competitiveness of the district heating system as compared to other ways of heating and cooling buildings and remedy the defects of the prior art. In addition, an object of the invention is to enable an energy-efficient and affordable cooling system for buildings located outside the district cooling networks.

### SUMMARY OF THE INVENTION

The system, method and use according to the invention are characterized by the features set forth in the claims.

### DETAILED DESCRIPTION OF THE INVENTION

The heating and cooling system is defined in claim 1.

In one embodiment the system comprises at least one building-specific heat pump unit comprising at least one heat pump, and a first part of the heat pump unit is arranged to cool at least one liquid stream which is the return stream of the district heating network or a cooling liquid of a cooling pipework of the building, a second part being simultaneously arranged to heat a liquid of a liquid storage unit of the building. Preferably the liquid stream being cooled is selected according to application, season or time of day, and the selection may be controlled by means of the control device and/or the valves.

The heating and cooling system of a building and the corresponding method are based on a configuration where heating and/or cooling may be controlled building-specifically, such as building-, property- or application-specifically, taking varying conditions and the situation of the district heating network into consideration. In this connection, a heating and cooling system of a building refers to any heating and/or cooling system which may comprise a heating function, a cooling function or both, i.e. a heating and cooling function, of the building.

In this connection, a building refers to any building, property or the like, which may comprise one or more than one individual building, but which have a common heating and/or cooling system.

A heating and cooling system of a building refers in this connection to a system by which the heating or cooling of the building and property may be implemented or alternatively the heating and cooling of the building or property may be implemented as a selected operation.

A heat transfer stream refers in this connection to any heat transfer stream for transferring heat. The transfer of heat may be carried out for example by means of any liquid, such as a liquid stream or liquid streams.

A liquid storage unit refers in this connection to any liquid storage unit or heat storage unit which holds a liquid for storing heat therein and which may contain any liquid suited for the purpose, e.g. water or other suitable liquid. In one embodiment the liquid storage unit is a hot water storage unit.

In one embodiment the liquid storage unit is connected to a heating pipework of the building, e.g. to a heating radiator system of the building. In one embodiment the liquid of the liquid storage unit may be circulated in the heating pipework of the building. In one embodiment the liquid of the liquid storage unit is used for heating a heating agent that circulates in the heating pipework of the building, e.g. water or a heating liquid.

In one embodiment the liquid storage unit is connected to a tap water system of the building, in which case the liquid of the liquid storage unit is preferably water. In one embodiment the water of the liquid storage unit may be circulated in the tap water system. In one embodiment the liquid of the liquid storage unit is used for heating the water of the tap water system.

In one embodiment the liquid storage unit is connected to the heating pipework and to the tap water system of the building.

In one embodiment the liquid stream being cooled is the return stream of the district heating network. The return stream of the district heating network is typically arranged to flow in the return pipe of the district heating network.

In one embodiment the liquid stream being cooled is the cooling liquid of the cooling pipework or the cooling liquid of the cold storage unit of the building. In this case the cooling liquid may be selected from a suitable cooling agent, water or their combinations.

The liquid stream being cooled is selected from the return stream of the district heating network and the cooling liquid of the cooling pipework or the cold storage unit of the building on the basis of whether the building needs to be heated or cooled.

In one embodiment the first part of the heat pump unit comprises an evaporator for performing the cooling of the liquid stream. In one embodiment the return stream of district heating is supplied through the evaporator for cooling the return stream. In one embodiment the cooling liquid of the cooling pipework or the cold storage unit of the building is supplied through the evaporator for cooling the cooling liquid.

In one embodiment the second part of the heat pump unit comprises a condenser for heating the liquid of the liquid storage unit. In one embodiment the liquid of the liquid storage unit is supplied through the condenser for heating the liquid.

In one embodiment, in addition to at least one heat pump the heat pump unit comprises at least one additional heat exchanger, e.g. a heat exchanger for the return stream of the district heating network, for cooling the return stream. In one embodiment the return stream of district heating is supplied through an evaporator-type heat exchanger for cooling the return stream.

In one embodiment the system comprises at least one additional heat exchanger between the heat pump and the liquid or cold storage unit. In one embodiment the heat exchanger is arranged between the heat pump and the liquid storage unit, whereby the heat transfer stream from the heat pump is conveyed to the heat exchanger and from the heat exchanger back to the heat pump, and the heat transfer stream from the heat exchanger is conveyed to the liquid storage unit and from the liquid storage unit to the heat exchanger. In one embodiment the heat exchanger is arranged between the heat pump and the cold storage unit, whereby the heat transfer stream from the heat pump is conveyed to the heat exchanger and from the heat exchanger back to the heat pump, and the heat transfer stream from the heat exchanger is conveyed to the cold storage unit and from the cold storage unit to the heat exchanger.

In one embodiment the evaporator of the heat pump is arranged to cool the return stream of the district heating network or the cooling liquid of the cold storage unit or the cooling liquid of the cooling pipework of the building. In one embodiment the cooling liquid of the cold storage unit or the cooling liquid of the cooling pipework of the building is cooled in the additional heat exchanger by means of a heat transfer stream coming from the heat pump. In one embodiment the condenser of the heat pump is arranged to heat the liquid of the liquid storage unit or the return stream of the district heating network. In one embodiment the liquid of the liquid storage unit is heated in the additional heat exchanger by means of a heat transfer stream coming from the heat pump. The selected liquid streams conveyed to the evaporator and to the condenser may be controlled by means of the control device and selected valve arrangements.

In one embodiment the heating and cooling system comprises at least one pump which is connected to the pipework for providing the flow of the liquid stream or streams in the pipework.

In one embodiment the pipework comprises at least one pipe for supplying a liquid stream from the feed stream of the district heating network to the heat pump and/or to the liquid storage unit. The pipework comprises at least one pipe for supplying a liquid stream from the heat pump and/or from the liquid storage unit to the feed stream of the district heating network.

The pipework comprises at least one pipe for supplying a liquid stream from the heat pump to the cooling agent storage unit or to the cooling pipework of the building and at least one pipe for supplying a liquid stream from the cooling agent storage unit or from the cooling pipework of the building to the heat pump.

In one embodiment the heating and cooling system or the heat pump unit comprises at least one additional evaporator which may be utilized when e.g. the cooling function is applied.

In one embodiment the return stream of the district heating network is arranged to be conveyed to the heat pump unit of the system via an inlet pipe.

In one embodiment the return stream of the district heating network is arranged to be conveyed to the heat pump unit of the system via an inlet pipe of the feed stream of district heating for conveying the water of the feed stream of district heating to the building in a normal situation. In one embodiment the return stream of district heating is connected to the same inlet pipe as the feed stream of district heating. In one embodiment the system comprises at least part of the inlet pipe of the feed stream of district heating, via which the return stream of district heating is arranged to be supplied to the heat pump unit.

In one embodiment the system comprises at least one valve to regulate, or in one embodiment to obstruct, the supply of the feed stream of district heating to the inlet pipe. In one embodiment the system comprises at least one valve via which the return stream of district heating is arranged to be supplied to the inlet pipe of the feed stream of district heating and further to the heat pump unit. In one embodiment a connecting pipe of the return stream of district heating to the heat pump unit is connected to the inlet pipe of the feed stream of district heating coming to the building, and at least one valve is arranged at a connecting point between the connecting pipe of the return stream and the inlet pipe for controlling the inlet of the return stream to the heat pump unit. When an existing inlet pipe of the district heating network is used in the present system, it is possible to return to district heating implemented by means of the feed stream of the district heating network. This way, also the district heating provider could control the supply of the streams of the district heating network to the building in a desired manner. In one embodiment the system comprises at least one regulating valve by which the flow in a pipe or the ratio of flows of two pipes may be regulated. In one embodiment the system comprises an on/off type valve for regulating the flow.

In one embodiment the supply conveyed to the heat pump unit of the system consists of the return stream of the district heating network. In one embodiment the supply conveyed to the heat pump unit of the system consists at least partly of the return stream of the district heating network and partly of the feed stream of the district heating network. In one embodiment the supply conveyed to the heat pump unit of the system comprises at least the return stream of the district heating network. The system is connected to both of the return and to the feed stream of the district heating network. By means of the valves, a desired inlet stream, e.g. the inlet of the feed stream, may be closed. In one embodiment the volume or ratio of the return stream and the feed stream of the district heating network is regulated by means of at least one valve, e.g. by means of a regulating valve, in the supply conveyed to the heat pump unit. Thus, the system may be used for demand response heating, e.g. by the district heating company. In one embodiment the volume of the return stream of the district heating network is regulated by means of at least one valve, e.g. a regulating valve.

In one embodiment the system comprises at least one outlet pipe to return the return stream of district heating from the heat pump unit to the return pipe of district heating.

In one embodiment the heat pump unit is connected to the return stream of the district heating network, and the first part of the heat pump unit is arranged to cool the return stream of the district heating network and the volume of the return stream of the district heating network is regulated by means of at least one valve. In one embodiment at least part of the return stream of the district heating network supplied to the heat pump unit is replaced with the feed stream of the district heating network.

In one embodiment the first part of the heat pump unit is arranged to cool the building by means of the cooling liquid of the cooling system of the building. The heat pump unit is connected both to the cooling system and to the return stream of the district heating network. When cooling is not performed, the first part of the heat pump unit is arranged to cool the return stream of the district heating network and the volume of the return stream of the district heating network is regulated by means of at least one valve. The heat pump unit comprises at least one additional heat exchanger for cooling the return stream of the district heating network and for directing heat for heating the liquid of the liquid storage unit.

In one embodiment at least one control device is arranged to regulate the volume of the return stream and/or the feed stream of the district heating network in the supply conveyed to the heat pump unit. In one embodiment the control device is arranged to control the regulating valve or valves of the inlet pipe. Preferably the regulating valve is connected to the control device and more than one regulating valve is connected to the same control device.

In one embodiment the cooling liquid of the cooling system of the building is directed to desired destinations in the building, preferably to destinations that are to be cooled. In one embodiment the cooling system of the building is connected with the radiator system of the building, so that the temperature of desired radiators of the radiator system may be controlled e.g. by means of electronic radiator thermostats for boosting the cooling in the building. In one embodiment the cooling is controlled by means of the control device.

In this system the heat pump of the heat pump unit and the possible additional heat exchanger may be selected from any applicable device. The heat pump may be any heat pump known as such. Preferably the heat pump comprises a cooling agent compatible compressor, a condenser, an expansion valve and an evaporator.

By means of the present heating and cooling system it is possible to implement various heat transfer arrangements, such as heating and/or cooling arrangements. The desired heat transfer arrangement may be implemented by means of the control device and a selected valve arrangement. The same heating and cooling system may be used to implement many different heat transfer arrangements. In one heat transfer arrangement a heat transfer stream is supplied from the return stream of the district heating network to the evaporator of the heat pump and returned from the heat pump to the return stream of the district heating network, and another heat transfer stream is supplied from the liquid storage unit to the condenser of the heat pump and from the heat pump back to the liquid storage unit. In another heat transfer arrangement a heat transfer stream is supplied from the return stream of the district heating network to the evaporator of the heat pump and returned from the heat pump to the return stream of the district heating network, and another heat transfer stream is supplied from the return stream of the district heating network to the condenser of the heat pump and from the heat pump to the feed stream of the district heating network. In another heat transfer arrangement a heat transfer stream is supplied from the return stream of the district heating network to the liquid storage unit and returned from the liquid storage unit back to the return stream of the district heating network, bypassing the heat pump. In another heat transfer arrangement a heat transfer stream is supplied from the return stream of the district heating network to the evaporator of the heat pump and returned from the heat pump to the return stream of the district heating network, and another heat transfer stream is supplied from the return stream of the district heating network via the condenser of the heat pump to the liquid storage unit and returned from the liquid storage unit back to the return stream of the district heating network. In another heat transfer arrangement a heat transfer stream is supplied from the feed stream of the district heating network to the liquid storage unit and returned from the liquid storage unit to the return stream of the district heating network, bypassing the heat pump. In another heat transfer arrangement a heat transfer stream is supplied from the cold storage unit or from the cooling pipework to the evaporator of the heat pump and from the heat pump to the cold storage unit or to the cooling pipework, and another heat transfer stream is supplied from the liquid storage unit to the condenser of the heat pump and from the heat pump back to the liquid storage unit. In another heat transfer arrangement a heat transfer stream is supplied from the return stream of the district heating network to the condenser of the heat pump and returned from the heat pump to the feed stream of the district heating network, and another heat transfer stream is supplied from the cold storage unit or from the cooling pipework to the evaporator of the heat pump and from the heat pump to the cold storage unit or to the cooling pipework. In another heat transfer arrangement a heat transfer stream is supplied from the heat pump to the heat exchanger and from the heat exchanger back to the heat pump, and another heat transfer stream is supplied from the heat exchanger to the liquid storage unit and from the liquid storage unit to the heat exchanger. In another heat transfer arrangement a heat transfer stream is supplied from the heat pump to the heat exchanger and from the heat exchanger back to the heat pump, and another heat transfer stream is supplied from the heat exchanger to the cold storage unit and from the cold storage unit to the heat exchanger. The desired heat transfer arrangement may for example be selected from the above-described heat transfer arrangements. With one heating and cooling system, more than one heat transfer arrangement may be implemented at the same time.

In the method a building is heated or cooled by means of a heating and cooling system. In the method, at least one heat transfer stream to be heated and/or cooled is selected for heating or cooling the building by using the heating and cooling system, the system comprising at least one heat pump unit comprising at least one heat pump by means of which a desired heat transfer stream may be cooled and a desired heat transfer stream heated, and the system comprising a pipework for conveying at least one heat transfer stream from a return or a feed stream of a district heating network to the heat pump, from the heat pump to the return or the feed stream of the district heating network, from the heat pump to a liquid storage unit, from the liquid storage unit to the heat pump, from the heat pump to a cold storage unit, from the cold storage unit to the heat pump, from the liquid storage unit to the feed stream of the district heating network, from the feed stream of the district heating network to the liquid storage unit, from the heat pump to a heat exchanger, from the heat exchanger to the heat pump, from the liquid of cold storage unit to the heat exchanger, and/or from the heat exchanger to the liquid or cold storage unit, and/or for conveying a heat transfer stream past the heat pump, as well as valves arranged in connection with the pipework and a control device for controlling the valves and the paths of the liquid streams in the pipework to implement a desired heat transfer arrangement.

In one embodiment, in the method the building is heated or cooled by means of at least one building-specific heat pump unit comprising at least one heat pump, and a first part of the heat pump unit is arranged to cool at least one liquid stream which is the return stream of the district heating network or a cooling liquid of a cooling system of the building, a second part of the heat pump unit being simultaneously arranged to heat a liquid of the liquid storage unit of the building.

In one method embodiment the building is heated by means of the building-specific heat pump unit to the first part of which a liquid stream is directed from the return stream of the district heating network and the first part of which cools said return stream of the district heating network simultaneously as the second part of the heat pump unit is arranged to heat the liquid of the liquid storage unit of the building.

In one method embodiment the building is cooled by means of the building-specific heat pump unit via the first part of which there is circulated a cooling liquid of a cooling pipework or the cold storage unit of the building and the first part of which cools said cooling liquid simultaneously as the second part of the heat pump unit is arranged to heat the liquid of the liquid storage unit of the building. If cooling is not needed, the same system is used for heating the building by means of the same heat pump unit to the first part of which a liquid stream is directed from the return stream of the district heating network and the first part of which cools said return stream of the district heating network simultaneously as the second part of the heat pump unit is arranged to heat the liquid of the liquid storage unit of the building.

The heating and cooling system of a building may be used in various applications. In one embodiment the system is used in industrial buildings, residential buildings, hall buildings or in any building requiring heating and/or cooling, or in their combinations.

By means of the invention it is possible to provide a building-specific, e.g. property-specific, heating-cooling system in which it is possible to utilize the return stream of the district heating network and which is easily adaptable according to conditions. The system according to the invention may be utilized for demand response heating. The system may thus streamline the district heating network heat consumption. In addition, due to the invention it is possible to increase e.g. the production of electricity in a combined district heating network and electricity network configuration when the return stream of district heating is cooled. It is advantageous for the district heating company to sell the heat energy contained in the return stream of district heating at a cheap price because the return stream heat pump improves cooling of the return stream while heating the property and tap water. This increases electricity production in combined power and heat generation and reduces e.g. heat and pumping losses. On the other hand, the investment cost that is clearly lower than with ground source heating systems is an appealing solution for building owners, and the system according to the invention offers, with a small investment, affordable heating and enables energy efficient cooling.

The system according to the invention may be implemented easily and cost-efficiently. The system according to the invention does not require expensive pipework configurations for cooling or heating a building, and the existing pipework may be utilized in the system. Further, building-specific cooling and heating may be implemented in a distributed manner at desired property locations.

### LIST OF FIGURES

The invention will now be explained by way of examples, with reference to the accompanying drawings in which
Fig. 1 illustrates one system without a cooling function, not being part of the invention,
Fig. 2a illustrates another system with a cooling function, not being part of the invention,
Fig. 2b illustrates the system according to Fig. 2a when the cooling function is not in use, not being part of the invention,
Fig. 3 illustrates one heating and cooling system according to the invention, in which a desired heat transfer arrangement may be selected, and
Fig. 4 illustrates one heating and cooling system according to the invention, in which a desired heat transfer arrangement may be selected.

### EXAMPLES

The invention will now be described by means of examples, with reference to the accompanying figures. In the figures the heating and cooling systems are illustrated by way of example, only their main features being shown in the figures.

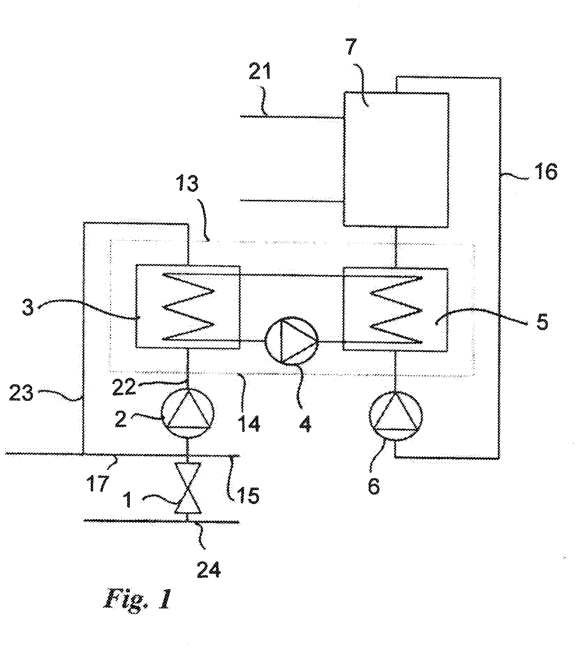

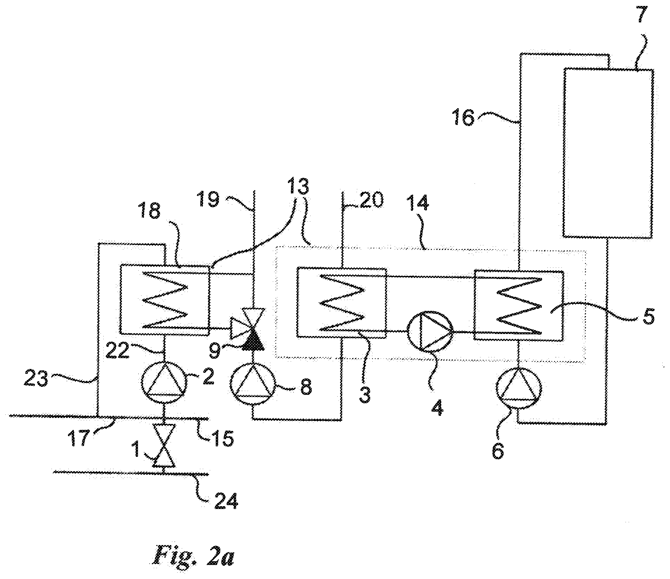

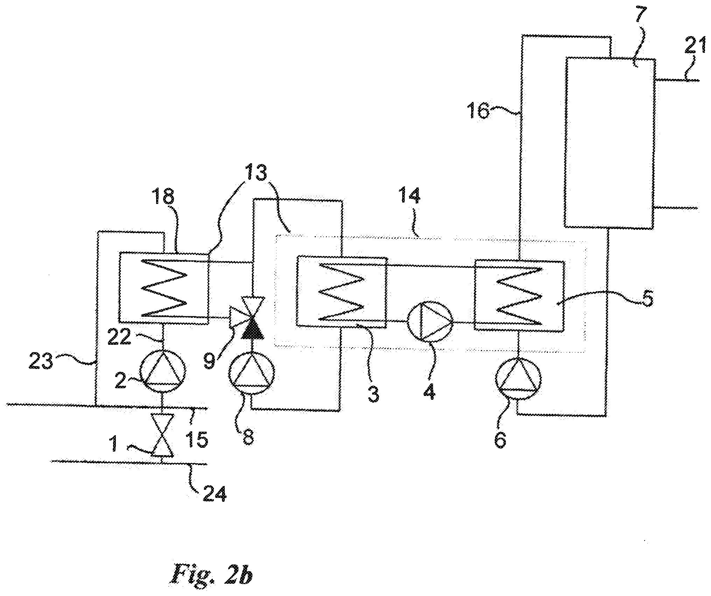

Fig. 1, 2a and 2b illustrate some heating and cooling systems of a building, which may be used for implementing building-specific heating and cooling.

In Fig. 1 the heating and cooling system of a building comprises one building-specific heat pump unit (13) comprising one heat pump (14). A first part of the heat pump unit is arranged to cool a liquid stream which is a return stream (15) of a district heating network, a second part simultaneously being arranged to heat a liquid (16) of a liquid storage unit (7) of the building, such as water of a liquid storage unit belonging to a heating pipework. In this case the liquid stream to be cooled is the return stream (15) of the district heating network, which is directed from a return pipe (17) of the district heating network to the heat pump unit (13).

The liquid storage unit (7) filled with a liquid is connected to a heating pipework (21) of the building and to a tap water system of the building. By means of the liquid (16) of the liquid storage unit, the heating pipework provided with a liquid circulation, such as a radiator network, as well as water of the tap water system are heated. The second part of the heat pump unit (13) comprises a condenser (5) for heating the liquid of the liquid storage unit. The liquid (16) is circulated by means of a pump (6) through the condenser to the liquid storage unit (7) and back from there.

The first part of the heat pump unit (13) comprises an evaporator (3) for cooling a liquid stream. The return stream (15) is supplied by means of a pump (2) or without it from the return stream pipe (17) via an inlet pipe (22) of a feed stream of the district heating network to the evaporator (3) for recovering heat from the return stream and thereby for cooling the return stream. Further, the system comprises a valve (1) to regulate or obstruct the supply of a feed stream (24) of district heating to the inlet pipe (22). If desired, part of the return stream (15) conveyed to the heat pump unit may be replaced with the feed stream (24) of the district heating network. The ratio of return stream (15) to feed stream (24) may be regulated by means of one or more regulating valves. In addition, the system comprises an outlet pipe (23) to return the return stream of district heating from the heat pump unit to the return pipe of district heating. Supply of the return stream from the return stream pipe of district heating to the heat pump unit is performed, in the flow direction of the return stream, before the return stream is returned from the heat pump unit back to the return stream pipe of district heating.

In Fig. 2a and 2b the heating and cooling system of a building comprises one building-specific heat pump unit (13) comprising one heat pump (14) and one additional heat exchanger (18). The first part of the heat pump unit is arranged to cool a liquid stream which is the return stream (15) of the district heating network or alternatively a cooling liquid (19) of a cooling pipework (20) of the building, the second part being simultaneously arranged to heat the liquid (16) of the liquid storage unit (7) of the building, such as water of the liquid storage unit of the tap water system. The liquid stream to be cooled is in the cooling function (Fig. 2a) the cooling liquid (19) of the cooling pipework of the building and in the alternative heating function (Fig. 2b) it is the return stream (15) of the district heating network, which is directed from the return pipe (17) of the district heating network to the heat pump unit (13). The cooling or heating function may be selected according to application, season or time of day. The selection may be adjusted by means of a control device and regulating valves, e.g. valve (9).

The liquid storage unit (7) filled with a liquid may be connected to the heating pipework (21) of the building and to the tap water system of the building. By means of the liquid of the liquid storage unit, water of the tap water system and, if necessary, the heating pipework provided with a liquid circulation, such as a radiator network, may be heated. The second part of the heat pump unit (13) comprises a condenser (5) for heating the liquid of the liquid storage unit. The liquid (16) is circulated by means of the pump (6) through the condenser to the liquid storage unit (7) and back from there.

The first part of the heat pump unit (13) comprises an evaporator (3) for cooling a liquid stream. The cooling liquid (19) of the cooling pipework (20) is circulated by means of a pump (8) from the cooling pipework to the evaporator (3) of the heat pump and further via valve (9) back to the cooling pipework.

In addition to the heat pump (14), the heat pump unit (13) comprises an additional heat exchanger (18), in this connection a heat exchanger for the return stream of the district heating network, for cooling the return stream (15). The additional heat exchanger is an evaporator-type heat exchanger for cooling the return stream of district heating. When the building is not cooled (Fig. 2b), the return stream (15) is supplied by means of the pump (2) or without it from the return stream pipe (17) via the inlet pipe (22) of the feed stream to the evaporator (18) for recovering heat from the return stream and thereby for cooling the return stream. Further, the system comprises a valve (1) to regulate or obstruct the supply of the feed stream (24) of district heating to the inlet pipe (22). If desired, part of the return stream (15) conveyed to the heat pump unit may be replaced with the feed stream (24) of the district heating network. The ratio of return stream (15) to feed stream (24) may be regulated by means of one or more regulating valves, as is described with reference to Fig. 1. In addition, the system comprises an outlet pipe (23) to return the return stream of district heating from the heat pump unit to the return pipe of district heating. Supply of the return stream from the return stream pipe of district heating to the heat pump unit is performed, in the flow direction of the return stream, before the return stream is returned from the heat pump unit back to the return stream pipe of district heating.

In the building-specific heating and cooling system it is advantageous to implement the connections of Fig. 2a and 2b in the same system, such that heating and/or cooling may be started as needed by means of valves.

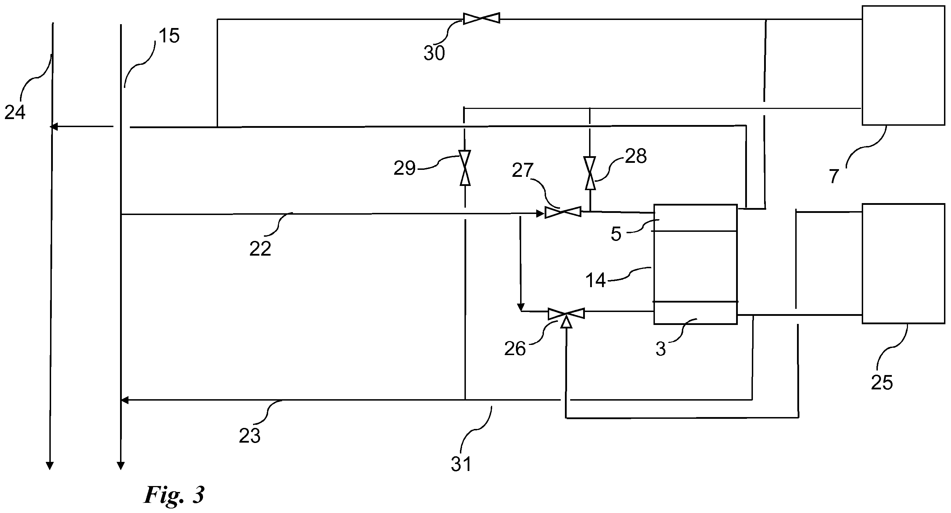

Fig. 3 illustrates one heating and cooling system according to the invention, in which a desired heating and/or cooling arrangement may be selected.

In Fig. 3 the heating and cooling system comprises one heat pump unit comprising one heat pump (14), the heat pump comprising an evaporator (3) for cooling a desired liquid stream, and a condenser (5) for heating a desired liquid stream. Further, the system comprises a pipework (31) comprising at least one pipe (22) for supplying a liquid stream from the return stream (15) of the district heating network to the heat pump (14) and at least one pipe (23) for returning a liquid stream from the heat pump to the return stream of the district heating network and comprising at least one pipe for supplying a liquid stream from the heat pump (14) to the liquid storage unit (7) and at least one pipe for supplying a liquid stream from the liquid storage unit to the heat pump. Further, the pipework comprises at least one bypass pipe for bypassing the heat pump (14) such that, in a selected heat transfer arrangement, a liquid stream may be directed past the heat pump (14). In addition, the pipework comprises at least one pipe for supplying a liquid stream from the heat pump (14) to a cold storage unit (25) and at least one pipe for supplying a liquid stream from the cold storage unit to the heat pump. In addition, the pipework comprises at least one pipe for supplying a liquid stream from the heat pump (14) and/or from the liquid storage unit (7) to the feed stream (24) of the district heating network. In addition, the pipework may comprise a pipe for supplying a liquid stream from the feed stream (24) of the district heating network to the heat pump (14) and/or to the liquid storage unit (7). The system also comprises valves (26,27,28,29,30) arranged in connection with the pipework (31) for selecting the paths of the liquid streams in the pipework, and at least one control device for controlling the valves and the paths of the liquid streams and for controlling a desired heat transfer arrangement in the system.

The evaporator (3) of the heat pump is arranged, by means of the control device and with the valve arrangements, to cool the return stream (15) of the district heating network or the cooling liquid of the cold storage unit (25). The condenser (5) of the heat pump is arranged, by means of the control device and with the valve arrangements, to heat the liquid of the liquid storage unit (7) or the return stream (15) of the district heating network.

The heating and cooling system comprises at least one pump connected at a suitable location of the pipework (31) for providing the flow of the liquid stream or streams in the pipework.

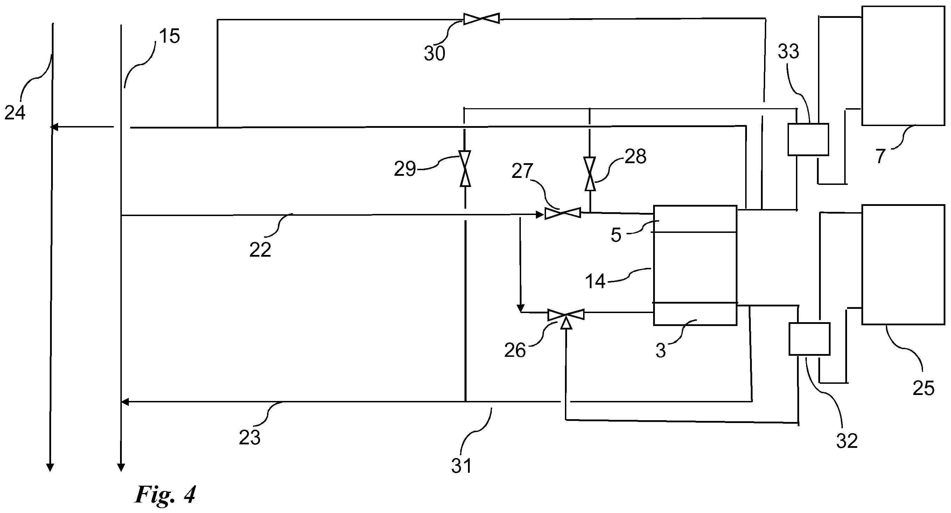

Fig. 4 illustrates one heating and cooling system according to the invention, corresponding in other respects to the system of Fig. 3, but comprising additional heat exchangers (32,33) between the heat pump (14) and the liquid (7) and cold storage units (25). The first heat exchanger (33) is arranged between the heat pump (14) and the liquid storage unit (7), such that a heat transfer stream from the heat pump is conveyed to the heat exchanger and from the heat exchanger back to the heat pump, and a heat transfer stream from the heat exchanger is conveyed to the liquid storage unit and from the liquid storage unit to the heat exchanger. The second heat exchanger (32) is arranged between the heat pump (14) and the cold storage unit (25), such that a heat transfer stream from the heat pump is conveyed to the heat exchanger and from the heat exchanger back to the heat pump, and a heat transfer stream from the heat exchanger is conveyed to the cold storage unit and from the cold storage unit to the heat exchanger.

By means of these heating and cooling systems illustrated in the figures it is possible to implement simultaneously one or more heating and/or cooling arrangements, for example according to the disclosure given hereinabove.

The system and method according to the invention are applicable, as different embodiments, for use in heating and/or cooling in a variety of buildings and applications.

The invention is not limited exclusively to the above-described examples, but many modifications are possible within the scope of the inventive idea defined by the claims.

## Claims

1. A heating and cooling system, comprising at least one heat pump, for providing heating and cooling, **characterized in that** the system comprises
a district heating network comprising a return stream (15) and a feed stream (24),
at least one heat pump unit comprising at least one heat pump (14), the heat pump comprising an evaporator (3) for cooling a desired heat transfer stream and a condenser (5) for heating a desired heat transfer stream,
at least one liquid storage unit (7) and cold storage unit (25),
optionally at least one heat exchanger (32,33),
a pipework (31) comprising pipes connected each other for conveying heat transfer streams,
valves (26,27,28,29) arranged in connection with the pipework (31) for selecting paths of the heat transfer streams in the pipework and for implementing desired heat transfer arrangements comprising heating and cooling arrangements in a building,
at least one control device for controlling the valves and the paths of the heat transfer streams in the pipework and for controlling the desired heat transfer arrangements in the system, and
the control device and valves being configured to control the convey of the heat transfer stream in the pipework from the return stream (15) of the district heating network to the heat pump (14), from the heat pump (14) to the return stream (15) of the district heating network, from the heat pump (14) to the liquid storage unit (7), from the liquid storage unit (7) to the heat pump (14), from the heat pump (14) to the cold storage unit (25), from the cold storage unit (25) to the heat pump (14), from the heat pump (14) to the feed stream (24) of the district heating network, from the liquid storage unit (7) to the feed stream (24) of the district heating network, from the feed stream (24) of the district heating network to the heat pump (14), from the feed stream (24) of the district heating network to the liquid storage unit (7), from the heat pump (14) to the heat exchanger (32,33), from the heat exchanger (32,33) to the heat pump (14), from the liquid or cold storage unit (7,25) to the heat exchanger (32,33), and/or from the heat exchanger (32,33) to the liquid or cold storage unit (7,25), and/or past the heat pump (14) by a bypass pipe, and
the evaporator (3) is arranged to cool the return stream (15) of the district heating network or a cooling liquid of the cold storage unit (25) and the condenser (5) is arranged to heat a liquid of the liquid storage unit (7) or the return stream (15) of the district heating network by means of the control device with the valve arrangements.

2. The system according to claim 1, **char-acterized** in that the liquid storage unit (7) is connected to a heating pipework (21) of the building and/or to a tap water system of the building.

3. The system according to claim 1 or 2, **characterized in that** the system comprises at least one building-specific heat pump unit (13) comprising at least one heat pump (14).

4. The system according to any one of claims 1 - 3, **characterized in that** in addition to at least one heat pump (14), the heat pump unit (13) comprises at least one additional heat exchanger (18) for cooling the return stream (15) of the district heating network.

5. The system according to any one of claims 1 - 4, **characterized in that** the return stream (15) of the district heating network is arranged to be conveyed to the heat pump unit (13) of the system via an inlet pipe (22) of the feed stream of district heating.

6. The system according to claim 5, **char-acterized** in that the system comprises at least one valve (1) to regulate the supply of the feed stream (24) of district heating to the inlet pipe (22) .

7. A method for heating or cooling a building by means of a heating and cooling system, according to any of the precedent claims, comprising at least one heat pump, in which the heating and cooling system is connected to a district heating network, **characterized in that** the heating and cooling system is connected to a return stream (15) and to a feed stream (24) of the district heating network, and at least one heat transfer stream to be heated and/or cooled is selected for heating or cooling the building by using the heating and cooling system, the system comprising at least one heat pump unit comprising at least one heat pump (14) by means of which a desired heat transfer stream is cooled and a desired heat transfer stream heated, and the system comprising at least one liquid storage unit (7) and cold storage unit (25), and optionally at least one heat exchanger (32,33), wherein an evaporator of the heat pump unit is arranged to cool at least one heat transfer stream which is the return stream (15) of the district heating network or a cooling liquid of the cold storage unit (25) and a condenser of the heat pump unit is arranged to heat a liquid of the liquid storage unit (7) or the return stream (15), and the system comprising a pipework (31) comprising pipes, valves (26,27,28,29,30) arranged in connection with the pipework and a control device for controlling the valves and the paths of the liquid streams in the pipework to implement desired heat transfer arrangements comprising heating and cooling arrangements in the building, and the control device and valves are configured to control the convey of the heat transfer stream in the pipework from the return or feed stream of the district heating network to the heat pump, from the heat pump to the return or feed stream of the district heating network, from the heat pump to the liquid storage unit, from the liquid storage unit to the heat pump, from the heat pump to the cold storage unit, from the cold storage unit to the heat pump, from the liquid storage unit to the feed stream of the district heating network, from the feed stream of the district heating network to the liquid storage unit, from the heat pump to the heat exchanger, from the heat exchanger to the heat pump, from the liquid of cold storage unit to the heat exchanger, and/or from the heat exchanger to the liquid or cold storage unit, and/or past the heat pump by a bypass pipe.

8. The method according to claim 7, **char-acterized** in that the building is heated or cooled by means of at least one building-specific heat pump unit (13) comprising at least one heat pump (14).

9. The method according to claim 7 or 8, **characterized in that** the volume of the return stream (15) of the district heating network is regulated by means of at least one valve.

10. Use of the heating and cooling system according to any one of claims 1 - 6, **character-ized** in that the system is used in industrial buildings, residential buildings, hall buildings or in a building requiring heating and/or cooling, or in their combinations.

## Patentansprüche

1. Heiz- und Kühlsystem, das mindestens eine Wärmepumpe umfasst, zum Bereitstellen von Heizung und Kühlung, **dadurch gekennzeichnet, dass** das System Folgendes umfasst:
ein Fernwärmenetz, das einen Rücklauf (15) und einen Vorlauf (24) umfasst,
mindestens eine Wärmepumpeneinheit, die mindestens eine Wärmepumpe (14) umfasst, wobei die Wärmepumpe einen Verdampfer (3) zur Kühlung eines gewünschten Wärmeübertragungsstroms und einen Kondensator (5) zum Heizen eines gewünschten Wärmeübertragungsstroms umfasst,
mindestens eine Flüssigkeitsspeichereinheit (7) und Kältespeichereinheit (25),
optional mindestens einen Wärmetauscher (32, 33),
ein Rohrsystem (31), das Rohre umfasst, die miteinander zum Transportieren von Wärmeübertragungsströmen verbunden sind,
Ventile (26, 27, 28, 29), die in Verbindung mit dem Rohrsystem (31) zum Auswählen von Pfaden der Wärmeübertragungsströme in dem Rohrsystem und zum Implementieren gewünschter Wärmeübertragungsanordnungen, die Heizund Kühlanordnungen in einem Gebäude umfassen, ausgelegt sind,
mindestens eine Steuerungsvorrichtung zum Steuern der Ventile und der Pfade der Wärmeübertragungsströme in dem Rohrsystem und zum Steuern der gewünschten Wärmeübertragungsanordnungen in dem System, und
wobei die Steuerungsvorrichtung und Ventile so konfiguriert sind, dass sie den Transport des Wärmeübertragungsstroms in dem Rohrsystem von dem Rücklauf (15) des Fernwärmenetzes zur Wärmepumpe (14), von der Wärmepumpe (14) zu dem Rücklauf (15) des Fernwärmenetzes, von der Wärmepumpe (14) zu der Flüssigkeitsspeichereinheit (7), von der Flüssigkeitsspeichereinheit (7) zu der Wärmepumpe (14), von der Wärmepumpe (14) zu der Kältespeichereinheit (25), von der Kältespeichereinheit (25) zu der Wärmepumpe (14), von der Wärmepumpe (14) zu dem Vorlauf (24) des Fernwärmenetzes, von der Flüssigkeitsspeichereinheit (7) zu dem Vorlauf (24) des Fernwärmenetzes, von dem Vorlauf (24) des Fernwärmenetzes zu der Wärmepumpe (14), von dem Vorlauf (24) des Fernwärmenetzes zu der Flüssigkeitsspeichereinheit (7), von der Wärmepumpe (14) zu dem Wärmetauscher (32, 33), von dem Wärmetauscher (32, 33) zu der Wärmepumpe (14), von der Flüssigkeits- oder Kältespeichereinheit (7, 25) zu dem Wärmetauscher (32, 33), und/oder von dem Wärmetauscher (32, 33) zu der Flüssigkeits- oder Kältespeichereinheit (7, 25), und/oder an der Wärmepumpe (14) vorbei durch eine Bypass-Leitung steuern, und
wobei der Verdampfer (3) dazu ausgelegt ist, den Rücklauf (15) des Fernwärmenetzes oder eine Kühlflüssigkeit der Kältespeichereinheit (25) zu kühlen, und wobei der Kondensator (5) dazu ausgelegt ist, eine Flüssigkeit der Flüssigkeitsspeichereinheit (7) oder den Rücklauf (15) des Fernwärmenetzes zu heizen, mittels der Steuerungsvorrichtung mit den Ventilanordnungen.

2. System nach Anspruch 1, **dadurch gekennzeichnet, dass** die Flüssigkeitsspeichereinheit (7) mit einem Heizungsrohrsystem (21) des Gebäudes und/oder mit einem Leitungswassersystem des Gebäudes verbunden ist.

3. System nach Anspruch 1 oder 2, **dadurch gekennzeichnet, dass** das System mindestens eine gebäudespezifische Wärmepumpeneinheit (13), die mindestens eine Wärmepumpe (14) umfasst, umfasst.

4. System nach einem der Ansprüche 1-3, **dadurch gekennzeichnet, dass** zusätzlich zu mindestens einer Wärmepumpe (14), die Wärmepumpeneinheit (13) mindestens einen zusätzlichen Wärmetauscher (18) zum Kühlen des Rücklaufs (15) des Fernwärmenetzes umfasst.

5. System nach einem der Ansprüche 1-4, **dadurch gekennzeichnet, dass** der Rücklauf (15) des Fernwärmenetzes so angeordnet ist, dass er über ein Einlassrohr (22) des Vorlaufs des Fernwärmenetzes zur Wärmepumpeneinheit (13) des Systems geleitet wird.

6. System nach Anspruch 5, **dadurch gekennzeichnet, dass** das System mindestens ein Ventil (1) umfasst, um die Bereitstellung des Vorlaufs (24) des Fernwärmenetzes zum Einlassrohr (22) zu regulieren.

7. Verfahren zum Heizen oder Kühlen eines Gebäudes mittels eines Heiz- und Kühlsystems nach einem der vorherigen Ansprüche, umfassend:
mindestens eine Wärmepumpe, wobei das Heiz- und Kühlsystem mit dem Fernwärmenetz verbunden ist, **dadurch gekennzeichnet, dass** das Heiz- und Kühlsystem mit einem Rücklauf (15) und einem Vorlauf (24) des Fernwärmenetzes verbunden ist, und mindestens ein zu heizender und/oder zu kühlender Wärmeübertragungsstrom zum Heizen oder Kühlen des Gebäudes unter Verwendung des Heiz- und Kühlsystems ausgewählt wird, wobei das System mindestens eine Wärmepumpeneinheit, die mindestens eine Wärmepumpe (14) umfasst, mittels derer ein gewünschter Wärmeübertragungsstrom gekühlt und ein gewünschter Wärmeübertragungsstrom geheizt wird, umfasst, und wobei das System mindestens eine Flüssigkeitsspeichereinheit (7) und Kältespeichereinheit (25) umfasst, und optional mindestens einen Wärmetauscher (32, 33), wobei ein Verdampfer der Wärmepumpeneinheit dazu ausgelegt ist, mindestens einen Wärmeübertragungsstrom, der dem Rücklauf (15) des Fernwärmenetzes oder einer Kühlflüssigkeit der Kältespeichereinheit (25) entspricht, zu kühlen, und ein Kondensator der Wärmepumpeneinheit dazu ausgelegt ist, eine Flüssigkeit der Flüssigkeitsspeichereinheit (7) oder des Rücklaufs (15) zu heizen, und wobei das System ein Rohrsystem (31), das Rohre umfasst, Ventile (26, 27, 28, 29 ,30), die in Verbindung mit dem Rohrsystem angeordnet sind und eine Steuerungsvorrichtung zur Steuerung der Ventile und der Pfade des Flüssigkeitsstroms in dem Rohrsystem umfasst, zum Implementieren gewünschter Wärmeübertragungsanordnungen, die Heiz- und Kühlungsanordnungen in dem Gebäude umfassen, und die Steuerungsvorrichtung und Ventile so konfiguriert sind, dass sie den Transport des Wärmeübertragungsstrom in dem Rohrsystem von dem Rück- oder Vorlauf des Fernwärmenetzes zu der Wärmepumpe, von der Wärmepumpe zu dem Rück- oder Vorlauf des Fernwärmenetzes, von der Wärmepumpe zu der Flüssigkeitsspeichereinheit, von der Flüssigkeitsspeichereinheit zu der Wärmepumpe, von der Wärmepumpe zu der Kältespeichereinheit, von der Kältespeichereinheit zu der Wärmepumpe, von der Flüssigkeitsspeichereinheit zu dem Vorlauf des Fernwärmenetzes, von dem Vorlauf des Fernwärmenetzes zu der Flüssigkeitsspeichereinheit, von der Wärmepumpe zu dem Wärmetauscher, von dem Wärmetauscher zu der Wärmepumpe, von der Flüssigkeit der Kältespeichereinheit zu dem Wärmetauscher, und/oder von dem Wärmetauscher zu der Flüssigkeit oder Kältespeichereinheit, und/oder an der Wärmepumpe vorbei durch eine Bypass-Rohr steuern.

8. Verfahren nach Anspruch 7, **dadurch gekennzeichnet, dass** das Gebäude mittels mindestens einer gebäudespezifischen Wärmepumpeneinheit (13), die mindestens eine Wärmepumpe (14) umfasst, geheizt oder gekühlt wird.

9. Verfahren nach Anspruch 7 oder 8, **dadurch gekennzeichnet, dass** das Volumen des Rücklaufs (15) des Fernwärmenetzes mittels mindestens eines Ventils reguliert wird.

10. Verwendung des Heiz- oder Kühlsystems nach einem der Ansprüche 1-6, **dadurch gekennzeichnet, dass** das System in Industriegebäuden, Wohngebäuden, Hallen oder in einem Gebäude, das Heizung und/oder Kühlung benötig, oder in einer Kombination davon verwendet wird.

## Revendications

1. Système de chauffage et de refroidissement, comprenant au moins une pompe à chaleur, pour fournir du chauffage et du refroidissement, **caractérisé en ce que** le système comprend
un réseau de chauffage urbain comprenant un flux de retour (15) et un flux d'alimentation (24),
au moins une unité de pompe à chaleur comprenant au moins une pompe à chaleur (14), la pompe à chaleur comprenant un évaporateur (3) destiné à refroidir un flux de transfert de chaleur souhaité et un condenseur (5) destiné à chauffer un flux de transfert de chaleur souhaité,
au moins une unité (7) de stockage de liquide et une unité (25) de stockage de froid,
facultativement au moins un échangeur de chaleur (32, 33),
une tuyauterie (31) comprenant des tuyaux reliés entre eux pour transporter des flux de transfert de chaleur,
des vannes (26, 27, 28, 29) agencées en raccordement à la tuyauterie (31) pour sélectionner des chemins des flux de transfert de chaleur dans la tuyauterie et pour mettre en oeuvre des agencements de transfert de chaleur souhaités comprenant des agencements de chauffage et de refroidissement dans un bâtiment,
au moins un dispositif de commande destiné à commander les vannes et les chemins des flux de transfert de chaleur dans la tuyauterie et à commander les agencements de transfert de chaleur souhaités dans le système, et
le dispositif de commande et les vannes étant configurés pour commander le transport du flux de transfert de chaleur dans la tuyauterie depuis le flux de retour (15) du réseau de chauffage urbain vers la pompe à chaleur (14), depuis la pompe à chaleur (14) vers le flux de retour (15) du réseau de chauffage urbain, depuis la pompe à chaleur (14) vers l'unité (7) de stockage de liquide, depuis l'unité (7) de stockage de liquide vers la pompe à chaleur (14), depuis la pompe à chaleur (14) vers l'unité (25) de stockage de froid, depuis l'unité (25) de stockage de froid vers la pompe à chaleur (14), depuis la pompe à chaleur (14) vers le flux d'alimentation (24) du réseau de chauffage urbain, depuis l'unité (7) de stockage de liquide vers le flux d'alimentation (24) du réseau de chauffage urbain, depuis le flux d'alimentation (24) du réseau de chauffage urbain vers la pompe à chaleur (14),
depuis le flux d'alimentation (24) du réseau de chauffage urbain vers l'unité (7) de stockage de liquide, depuis la pompe à chaleur (14) vers l'échangeur de chaleur (32, 33), depuis l'échangeur de chaleur (32, 33) vers la pompe à chaleur (14), depuis l'unité (7, 25) de stockage de liquide ou de froid vers l'échangeur de chaleur (32, 33), et/ou depuis l'échangeur de chaleur (32, 33) vers l'unité (7, 25) de stockage de liquide ou de froid, et/ou au-delà de la pompe à chaleur (14) par un tuyau de dérivation, et
l'évaporateur (3) est agencé pour refroidir le flux de retour (15) du réseau de chauffage urbain ou un liquide de refroidissement de l'unité (25) de stockage de froid et le condenseur (5) est agencé pour chauffer un liquide de l'unité (7) de stockage de liquide ou le flux de retour (15) du réseau de chauffage urbain au moyen du dispositif de commande avec les agencements de vannes.

2. Système selon la revendication 1, **caractérisé en ce que** l'unité (7) de stockage de liquide est relié à une tuyauterie (21) de chauffage du bâtiment et/ou à un système d'eau courante du bâtiment.

3. Système selon la revendication 1 ou 2, **caractérisé en ce que** le système comprend au moins une unité (13) de pompe à chaleur spécifique au bâtiment comprenant au moins une pompe à chaleur (14).

4. Système selon l'une quelconque des revendications 1 à 3, **caractérisé en ce que** en plus d'au moins une pompe à chaleur (14), l'unité (13) de pompe à chaleur comprend au moins un échangeur de chaleur supplémentaire (18) destiné à refroidir le flux de retour (15) du réseau de chauffage urbain.

5. Système selon l'une quelconque des revendications 1 à 4, **caractérisé en ce que** le flux de retour (15) du réseau de chauffage urbain est agencé pour être transporté jusqu'à l'unité (13) de pompe à chaleur du système via un tuyau d'entrée (22) du flux d'alimentation de chauffage urbain.

6. Système selon la revendication 5, **caractérisé en ce que** le système comprend au moins une vanne (1) pour réguler l'apport du flux d'alimentation (24) de chauffage urbain au tuyau d'entrée (22).

7. Procédé pour chauffer ou refroidir un bâtiment au moyen d'un système de chauffage et de refroidissement, selon l'une quelconque des revendications précédentes, comprenant au moins une pompe à chaleur, dans laquelle le système de chauffage et de refroidissement est relié à un réseau de chauffage urbain, **caractérisé en ce que** le système de chauffage et de refroidissement est relié à un flux de retour (15) et à un flux d'alimentation (24) du réseau de chauffage urbain, et au moins un flux de transfert de chaleur à chauffer et/ou à refroidir est sélectionné pour chauffer ou refroidir le bâtiment en utilisant le système de chauffage et de refroidissement, le système comprenant au moins une unité de pompe à chaleur comprenant au moins une pompe à chaleur (14) au moyen de laquelle un flux de transfert de chaleur souhaité est refroidi et un flux de transfert de chaleur souhaité est chauffé, et le système comprenant au moins une unité (7) de stockage de liquide et une unité (25) de stockage de froid, et facultativement au moins un échangeur de chaleur (32, 33), dans lequel un évaporateur de l'unité de pompe à chaleur est agencé pour refroidir au moins un flux de transfert de chaleur qui est le flux de retour (15) du réseau de chauffage urbain ou un liquide de refroidissement de l'unité (25) de stockage de froid et un condenseur de l'unité de pompe à chaleur est agencé pour chauffer un liquide de l'unité (7) de stockage de liquide ou le flux de retour (15), et le système comprenant une tuyauterie (31) comprenant des tuyaux, des vannes (26, 27, 28, 29, 30) agencées en raccordement à la tuyauterie et un dispositif de commande destiné à commander les vannes et les chemins des flux de liquide dans la tuyauterie pour mettre en oeuvre des agencements de transfert de chaleur souhaités comprenant des agencements de chauffage et de refroidissement dans le bâtiment, et le dispositif de commande et les vannes sont configurés pour commander le transport du flux de transfert de chaleur dans la tuyauterie depuis le flux de retour ou d'alimentation du réseau de chauffage urbain vers la pompe à chaleur, depuis la pompe à chaleur vers le flux de retour ou d'alimentation du réseau de chauffage urbain, depuis la pompe à chaleur vers l'unité de stockage de liquide, depuis l'unité de stockage de liquide vers la pompe à chaleur, depuis la pompe à chaleur vers l'unité de stockage de froid, depuis l'unité de stockage de froid vers la pompe à chaleur, depuis l'unité de stockage de liquide vers le flux d'alimentation du réseau de chauffage urbain, depuis le flux d'alimentation du réseau de chauffage urbain vers l'unité de stockage de liquide, depuis la pompe à chaleur vers l'échangeur de chaleur, depuis l'échangeur de chaleur vers la pompe à chaleur, depuis l'unité de stockage de liquide ou de froid vers l'échangeur de chaleur, et/ou depuis l'échangeur de chaleur vers l'unité de stockage de liquide ou de froid, et/ou au-delà de la pompe à chaleur par un tuyau de dérivation.

8. Procédé selon la revendication 7, **caractérisé en ce que** le bâtiment est chauffé ou refroidi au moyen d'au moins une unité (13) de pompe à chaleur spécifique au bâtiment comprenant au moins une pompe à chaleur (14).

9. Procédé selon la revendication 7 ou 8, **caractérisé en ce que** le volume du flux de retour (15) du réseau de chauffage urbain est régulé au moyen d'au moins une vanne.

10. Utilisation du système de chauffage et de refroidissement selon l'une quelconque des revendications 1 à 6, **caractérisé en ce que** le système est utilisé dans des bâtiments industriels, des bâtiments résidentiels, des bâtiments publics ou dans un bâtiment nécessitant du chauffage et/ou du refroidissement, ou dans leurs combinaisons.
